# EUROPÄISCHE PATENTSCHRIFT

(11) **EP 0 612 470 B1**
(45) Veröffentlichungstag und Bekanntmachung des Hinweises auf die Patenterteilung: **05.06.1996**
(21) Anmeldenummer: 94250039.8
(22) Anmeldetag: 21.02.1994
(51) Int. Cl.: A01N 33/04

(54) **Desinfektionsmittelkonzentrat und Desinfektionsmittel auf Amin- und Alkoholbasis und deren Verwendung**
Disinfecting agent concentrate and disinfecting agent on amin- and alcohol basis and use thereof
Concentré d'agent désinfectant et agent désinfectant à base d'amine et d'alcool et son utilisation

(30) Priorität: 25.02.1993 DE 4306344
(43) Veröffentlichungstag der Anmeldung: 31.08.1994
(73) Patentinhaber: Schülke & Mayr GmbH & Co. KG, 22840 Norderstedt (DE)
(72) Erfinder: Löwer, Bernd, Dr., D-22337 Hamburg (DE); Eggensperger, Heinz, Dr., D-22397 Hamburg (DE); Goroncy-Bermes, Peter, Dr., D-22926 Ahrensburg (DE); Mohr, Michael, D-24568 Kaltenkirchen (DE); Dettmann, Andreas, D-22179 Hamburg (DE)
(74) Vertreter: UEXKÜLL & STOLBERG

(56) Entgegenhaltungen:
- EP-A- 0 343 605
- DE-A- 4 033 272
- FR-A- 2 602 955
- CHEMICAL PATENTS INDEX, DOCUMENTATION ABSTRACTS JOURNAL Week 9313, Derwent Publications Ltd., London, GB; AN 93-104148/13 & JP-A-05 043 405 (TOTO) 23. Februar 1993

## Beschreibung

Die Erfindung betrifft ein Desinfektionsmittelkonzentrat auf Amin- und Alkoholbasis, ein daraus herstellbares Desinfektionsmittel sowie deren Verwendung.

Desinfektionsmittel werden in vielen Bereichen eingesetzt, wobei sie der Bekämpfung von Mikroorganismen dienen. Beispielsweise werden sie zur Händedesinfektion, Operationsfeld- oder Wunddesinfektion, Instrumentendesinfektion, Desinfektion von Oberflächen, Wäsche usw. verwendet. Von großem Interesse ist die Wirksamkeit von Desinfektionsmitteln gegen Mykobakterien, insbesondere gegen Tuberkulose-Erreger, die relativ widerstandsfähig sind, so daß häufig keine Abtötung erfolgt, sondern lediglich ihre Vermehrung für einen kurzen Zeitraum gehemmt wird. Darüber hinaus ist neben der bakteriziden Wirksamkeit auch die fungizide und viruzide Wirksamkeit interessant. Erstrebenswert sind möglichst kurze Einwirkzeiten der Desinfektionsmittel bei nichtsdestoweniger gründlicher und nachhaltiger Desinfektionswirkung.

Bisher bekannt sind beispielsweise Desinfektionsmittel, die als Wirkstoffe ein oder mehrere Aldehyde oder Phenole enthalten.

Aus der EP 0 333 143 A2 ist darüberhinaus ein flüssiges Reinigungsmittel bekannt, das als bioziden Wirkstoff ein tertiäres Alkylamin, insbesondere N,N-Bis-(3-aminopropyl)laurylamin und ferner als notwendige Reinigungskomponente anionisches Tensid enthält. Darüber hinaus kann dieses Reinigungsmittel als Lösungsmittel zusätzlich Wasser oder Alkohole mit bis zu 4 Kohlenstoffatomen wie Methanol, Ethanol usw. enthalten. Es kann als Desinfektionsreiniger eingesetzt werden.

Ferner ist aus der EP 0 343 605 A1 ein tuberkulozides Desinfektionsmittel bekannt, das als desinfizierende Komponente N,N-Bis-(3-aminopropyl)laurylamin umfaßt. Neben einem Lösungsmittelgemisch von Wasser und einem Alkohol mit bis zu 4 Kohlenstoffatomen wie Methanol, Ethanol usw. kann es als Reinigungsmittel auch Tenside, quaternäre Ammoniumverbindungen sowie Komplexbildner enthalten.

Aus der EP 0 385 369 A2 ist ein Verfahren zur antimikrobiellen Konservierung von flüssigen Tensiden und tensidhaltigen Lösungen bekannt, bei dem diesen Flüssigkeiten eine N,N-Bis-(3-aminopropyl)laurylamin enthaltende Zubereitung zugesetzt wird.

Bekannt ist aus der DE 40 05 784 A1 ferner ein Desinfektionsmittelkonzentrat, das neben einem Phenoxyalkohol eine kationenaktive Verbindung und nichtionisches Tensid enthält. Dieses Konzentrat kann Amine oder Aminopolyole wie Tetrakis-(2-hydroxypropyl)-N,N,N',N'-ethylendiamin als Alkalisierungsmittel enthalten.

Aus der FR-A-2 602 995 ist eine Reinigungs- und Desinfektionszusammensetzung bekannt, die ein Alkylalkylendiamin, bei dem die Alkylgruppe 8 bis 18 Kohlenstoffatome enthält und die Alkylengruppe 2 bis 4 Kohlenstoffatome enthält, z.B. Laurylpropylendiamin, Wasser und als weiteres Lösungsmittel Butylglykol umfaßt. Das enthaltene Butylglykol ist unbegrenzt mit Wasser mischbar und fungiert lediglich als Lösungsmittel bzw. Lösungsvermittler.

Aus der DE 40 33 272 C1 ist eine Zusammensetzung bekannt, die 1,2-Benzisothiazolin-3-on (BIT), ein Amin, das Lauryldipropylentriamin sein kann und als Lösungsmittel außer Wasser noch mit Wasser vollständig mischbare Lösungsmittel wie z.B. Butyldiglykol umfaßt.

Nachteilig an den oben genannten bekannten Desinfektionsmitteln und -konzentraten ist, daß a) Aldehyd- und Phenol enthaltende Desinfektionsmittel einen relativ starken und unangenehmen Geruch aufweisen, b) Desinfektionsmittel auf Basis von Amin und kationenaktiven Verbindungen oder von aromatischen Alkoholen und kationenaktiven Verbindungen eben aufgrund des Gehalts an kationenaktiven Verbindungen auf Oberflächen aufziehen und mit anionischen Tenside unverträglich sind, da sie diese desaktivieren. Ein Nachteil, den alle bisher bekannten Präparate aufweisen besteht darin, daß zur kurzfristigen Herbeiführung einer ausreichenden Desinfektionswirkung relativ hohe Wirkstoffkonzentrationen benötigt werden.

Der Erfindung liegt daher die Aufgabe zugrunde, ein Desinfektionsmittel bzw. ein Konzentrat desselben zur Verfügung zu stellen, wobei das Desinfektionsmittel bei im Vergleich zu den bekannten Desinfektionsmitteln gleicher Wirksamkeit erheblich verringerte Wirkstoffkonzentrationen aufweist bzw. bei seiner Anwendung die Einwirkzeit zur Erzielung der beabsichtigten Wirkung erheblich verkürzt werden kann. Das Desinfektionsmittel und das Desinfektionsmittelkonzentrat sollen sich durch Geruchsarmut auszeichnen und über einen längeren Zeitraum stabil und damit lagerfähig sein.

Zur Lösung dieser Aufgabe wird ein Desinfektionsmittelkonzentrat bzw. ein Desinfektionsmittel vorgeschlagen, das Amin und Alkohol umfaßt derart, daß die Alkoholkomponente mindestens einen begrenzt wassermischbaren aliphatischen Glykolether mit 1 bis 4 Alkylenoxideinheiten umfaßt, wobei die Wassermischbarkeit nicht mehr als 10% beträgt, und die Aminkomponente mindestens ein sekundäres und/oder tertiäres hydroxygruppenfreies Alkylamin umfaßt.

Bevorzugte Ausführungsformen des erfindungsgemäßen Desinfektionsmittelkonzentrats bzw. des Desinfektionsmittels sind Gegenstand der Unteransprüche.

Bei dem sekundären oder tertiären Alkylamin handelt es sich um ein Amin mit der allgemeinen Formel: 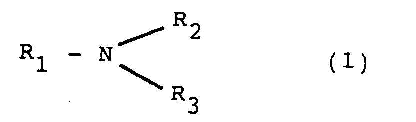
in der R₁ eine C₄-C₂₀-, insbesondere eine C₆-C₁₈-Alkylgruppe, eine C₅-C₁₀-, insbesondere eine C₆-Cycloalkylgruppe, eine C₇-C₁₀-, insbesondere eine C₇-Arylalkylgruppe oder eine C₆-C₁₄-, insbesondere eine C₆-Arylgruppe ist, in der R₂ eine Aminoalkylgruppe der Formel -(CH₂)ₙ-NH₂, wobei n eine Zahl von 2 bis 10, vorzugsweise 2 bis 6, besonders bevorzugt 2 bis 3 und in der R₃ Wasserstoff oder gleich R₂ ist.

Vorzugsweise ist R₁ eine C₆-C₁₈-Alkylgruppe, bevorzugter eine C₁₀-C₁₈- und besonders bevorzugt eine Dodecyl-, Cocosfettalkyl- oder eine Talgfettalkylgruppe. R₂ ist dabei vorzugsweise eine Aminopropylgruppe und R₃ gleich R₂ oder Wasserstoff. Sind dabei R₂ und R₃ gleich und Aminopropylgruppen und ist R₁ eine C₁₂-Alkylgruppe, dann ist das Amin das N-(3-Aminopropyl)-N-dodecyl-1,3-propandiamin bzw. N,N-Bis-(3-aminopropyl)laurylamin, welches unter der Bezeichnung "Lonzabac® 12" von der Firma Lonza Ltd., Basel/Schweiz, bezogen werden kann. Sind R₂ und R₃ gleich Talgfettalkyl, dann handelt es sich um ein Amin, das unter der Bezeichnung "Hoe S 3119®" von der Firma Hoechst AG, Frankfurt, bezogen werden kann.

Ist R₃ Wasserstoff, ist R₁ bevorzugt eine Cocosfettalkylgruppe und es handelt es bei dem Amin um das Cocospropylendiamin, das z.B. von der Firma Hoechst unter der Bezeichnung Genamin CCP 100D® geführt wird. Das tertiäre Amin Lonzabac® 12 ist gegenüber dem sekundären Amin Genamin CCP 100D® bevorzugt.

Bei dem begrenzt wassermischbaren aliphatischen Glykolether handelt es sich um Glykolether der allgemeinen Formel

R₄ - (O - R₅ )ₙ - OH, (2)

in der R₄ eine gerad- oder verzweigtkettige Alkylgruppe mit 5 bis 18 C-Atomen, bevorzugt 6 C-Atomen ist, R₅ eine gerad- oder verzweigtkettige Alkylengruppe mit 2 bis 4 C-Atomen, bevorzugt 2 C-Atomen ist und n eine ganze Zahl zwischen 1 und 4, bevorzugt 2 ist. Besonders bevorzugt ist Hexyldiglykol.

Die erfindungsgemäßen Glykolether weisen eine Wassermischbarkeit von nicht mehr als 10 %, bevorzugt bis zu 5 % auf. Sie besitzen darüber hinaus vorzugsweise einen niedrigen Dampfdruck und einen relativ hohen Geruchsschwellenwert. Der Dampfdruck ist vorzugsweise < 0,5 mbar, bevorzugter < 0,3 mbar und der Geruchsschwellenwert (in Wasser) ist vorzugsweise > 10 mmol/l, bevorzugter > 20 mmol/l. Der Geruchsschwellenwert ist definiert als Konzentration eines Stoffes in Luft oder Lösungsmittel, die eben noch zur Wahrnehmung seines typischen Geruchs ausreicht (Lexikon der Biologie, Band 2, Seite 228, Herder Verlag, Freiburg, Basel, Wien (1984)).

Das Desinfektionsmittelkonzentrat bzw. Desinfektionsmittel kann neben den oben genannten erfindungswesentlichen Bestandteilen außerdem übliche Zusätze wie Lösungsvermittler, Korrosionsschutzmittel, Komplexbildner, Entschäumer, Stabilisatoren, Puffer, Parfüm und/oder Farbstoffe umfassen.

Überraschenderweise ergibt sich bei Anwendung der erfindungsgemäßen Kombination aus begrenzt wassermischbaren Glykolen und sekundärem und/oder tertiärem Alkylamin eine synergistische biozide Wirkung, die eine Erniedrigung des Wirkstoffgehalt bzw. eine Verkürzung der Einwirkzeit ermöglicht.

Das Desinfektionsmittelkonzentrat enthält im allgemeinen 5 bis 50 Gew.-% sek. und/oder tert. Amin und 5 bis 50 Gew.-% begrenzt wassermischbaren Glykolether. Insbesondere enthält es 10 bis 20 Gew.-% Amin und 20 bis 30 Gew.-% Glykolether.

Die gebrauchsfertige Desinfektionsmittellösung enthält im allgemeinen 0,1 bis 10 Gew.-%, insbesondere 0,5 bis 5 Gew.-% und vorzugsweise 1 bis 5 Gew.-% des Desinfektionmittelkonzentrats und daher im allgemeinen 0,005 bis 5 Gew.% sek. und/oder tert. Amin und 0,005 bis 5 Gew.% begrenzt wassermischbaren Glykolether. Insbesondere enthält es 0,025 bis 2,5 Gew.% Amin und 0,025 oder 0,05 bis 2,5 Gew.% Glykolether, wobei 0,1 bis 1,0 Gew.% Amin und 0,2 bis 1,5 Gew.% Glykolether bevorzugt sind.

Bei Anwendung des erfindungsgemäßen Desinfektionsmittels tritt bereits bei Einwirkzeiten von 15 Minuten die gewünschte desinfizierende Wirkung ein. Bei Erhöhung der Einsatzkonzentration des Konzentrats in der Gebrauchslösung sind kürzere Einwirkzeiten möglich. Der pH-Wert von fertigen Gebrauchslösungen liegt im allgemeinen im Bereich von 7 bis 12, vorzugsweise 8 bis 11 und besonders bevorzugt 8,5 bis 10,5.

Vorzugsweise enthält das Desinfektionsmittelkonzentrat bzw. das Desinfektionsmittel keine kationenaktive Verbindung. Aufgrund der Abwesenheit von kationenaktiven Verbindungen besteht nicht die Gefahr, daß das Desinfektionsmittel an dem zu reinigenden Substrat in größerem Ausmaß haften bleibt oder darauf aufzieht und durch normale Spülvorgänge nicht ohne weiteres und vollständig entfernt wird.

Vorteilhafterweise kann die erfindungsgemäße Wirkstoffkombination mit anionischen und/oder nichtionischen Tensiden kombiniert werden, wobei anionische Tenside hinsichtlich der Reinigungswirkung und nichtionische Tenside oder eine Kombination aus anionischen und nichtionischen Tensiden hinsichtlich der bioziden Wirkung bevorzugt sind. Geeignete anionische Tenside umfassen Alkylsulfat, Alkylsulfonat, Alkylethersulfat, Alkylarylsulfonat, Alkylethercarbonsäure bzw. deren Alkali- oder Ammoniumsalz, wobei die Alkylgruppe 8 bis 18 Kohlenstoffatome enthält, oder eine Mischung von zwei oder mehreren dieser Verbindungen. Bevorzugt ist hierbei Alkylethercarbonsäure mit 2 bis 10, insbesondere 3 bis 5 Ethylenoxideinheiten.

Insbesondere durch Zusatz von Alkylethercarbonsäuren ergeben sich besonders stabile Desinfektionsmittel und Desinfektionsmittelkonzentrate, wobei die Desinfektionsmittellösungen hohe biozide Wirksamkeit und vorzügliche Reinigungsaktivität zeigen.

Das erfindungsgemäße Desinfektionsmittel bzw. -konzentrat ist eine klare Lösung mit sehr guter Stabilität, die auch nach längerer Lagerung keinen Niederschlag enthält, so daß keine Wirkstoffverluste durch Absetzen und Verwendung ohne vorheriges erneutes Auflösen auftreten.

Die erfindungsgemäßen Desinfektionsmittel bzw. -konzentrate weisen mit allen erdenklichen zu reinigenden Substraten eine gute Materialverträglichkeit auf.

Ferner ist bereits durch die grenzflächenaktive Aminkomponente Reinigungswirksamkeit gegeben, die durch den zusätzlich möglichen Gehalt an anionischem oder nichtionischem Tensid noch gesteigert werden kann. Darüber hinaus ist eine gute Abspülbarkeit von behandelten Materialien gegeben.

Die biozide Wirksamkeit beispielsweise gegenüber Aspergillus niger, Pseudomonas aeruginosa, Staphylococcus aureus, Proteus vulgaris oder Candida albicans, insbesondere aber die Wirksamkeit gegen Mykobakterien ist auch an Flächen und Instrumenten gegeben.

Insbesondere zeichnen sich das erfindungsgemäße Desinfektionsmittelkonzentrat bzw. das Desinfektionsmittel durch Emissionsarmut, d.h. Geruchsarmut, und einen vergleichsweise hohen Flammpunkt aus.

Gegenüber Konzentraten, die lediglich das sekundäre und/oder tertiäre Amin oder den begrenzt wassermischbaren Glykolether enthalten, zeichnet sich das erfindungsgemäße Desinfektionsmittelkonzentrat durch bessere anwendungstechnische Eigenschaften wie z.B. eine niedrigere Viskosität und höhere Lagerstabilität aus.

Das Hauptanwendungsgebiet des Desinfektionsmittelkonzentrats bzw. Desinfektionsmittels ist die Bekämpfung von Bakterien, insbesondere Mykobakterien, Pilzen und Viren.

Die Erfindung wird im folgenden anhand von Beispielen näher erläutert.

### Beispiel 1

Mikrobiologische Wirksamkeit gegen Mykobact. terrae im Keimträgerversuch.

Der wirkungssteigernde Effekt des sekundären Amins Genamin CCP 100D® sowie der tertiären Amine Lonzabac® 12 und Hoe S 3119® in Abmischung mit einem begrenzt wassermischbaren Glykolether am Beispiel des Hexyldiglykols wird durch Testung dieser Mischung in der Versuchsanordnung des Keimträgerversuchs gegen Mycobacterium terrae gemäß DGHM deutlich.

Notiert sind die für Keimfreiheit der Keimträger erforderlichen Einwirkzeiten.

| | 0,5 % | 1,0 % | 2,0 % | 3,0 % | 5,0 % |
|---|---|---|---|---|---|
| Formulierung A | | | | | |
| 20 g Marlipal® 013/120* | > 120' | > 120' | > 120' | > 120' | > 120' |
| 6 g Lutensol® ON 110* | | | | | |
| 20 g Hexyldiglykol | | | | | |
| ad 100 g Waser, gereinigt | | | | | |

| Formulierung B | | | | | |
|---|---|---|---|---|---|
| 20 g Marlipal® 013/120 | > 60' | 30' | 15' | 15' | 15' |
| 6 g Lutensol® ON 110 | | | | | |
| 20 g Hexyldiglykol | | | | | |
| 12 g Genamin CCP 100 D® | | | | | |
| ad 100 g Waser, gereinigt | | | | | |

| Formulierung C | | | | | |
|---|---|---|---|---|---|
| 20 g Marlipal® 013/120 | 120' | 120' | 60' | 30' | 30' |
| 6 g Lutensol® ON 110 | | | | | |
| 20 g Hexyldiglykol | | | | | |
| 12 g Lonzabac® 12 | | | | | |
| ad 100 g Waser, gereinigt | | | | | |

| Formulierung D | | | | | |
|---|---|---|---|---|---|
| 20 g Marlipal® 013/120 | > 120' | 120' | 120' | 120' | 60' |
| 6 g Lutensol® ON 110 | | | | | |
| 20 g Hexyldiglykol | | | | | |
| 12 g Hoe S 3119® | | | | | |
| ad 100 g Waser, gereinigt | | | | | |

| | | | | | |
|---|---|---|---|---|---|
| * Marlipal® 013/120 = Tridcanpolyethylenglykol(12)ether | | | | | |
| * Lutensol® ON 110 = Isodecanpolyethylenglykol(11)ether | | | | | |

### Beispiel 2

| Quantitativer Suspensionsversuch gemäß DGHM mit 0,2 % Albumin als Serumbelastung mit Ps. aeruginosa (I) und Staph. aureus (II) | | | | |
|---|---|---|---|---|
| Einwirkzeit | Konz. [%] | Formulierung E (nur Amin) | Formulierung F (Amin + Glykolether) | Formulierung G (nur Glykolether) |
| (I) | | | | |
| 30 min | 0,5 | 0,94 | 1,17 | 0 |
| | 1,0 | 1,30 | 1,42 | 0 |
| | 3,0 | 1,95 | 2,00 | 0 |
| | 5,0 | 3,43 | 3,69 | 0 |
| 60 min | 0,5 | 3,55 | 4,30 | 0 |
| | 1,0 | 4,67 | 4,48 | 0 |
| | 3,0 | 5,08 | 5,08 | 0 |
| | 5,0 | 4,78 | ≧ 5,08 | 0 |
| (II) | 0,5 | 3,39 | 4,53 | 0 |
| | 1,0 | 4,30 | ≧ 5,38 | 0 |
| | 3,0 | ≧ 5,38 | ≧ 5,38 | 0 |
| | 5,0 | ≧ 5,38 | ≧ 5,38 | 0 |
| Notiert sind die logarithmischen Keimzahlreduktionsfaktoren. | | | | |

Formulierungen der Beispiele 2 und 3

| | E | F | G | H | I |
|---|---|---|---|---|---|
| Lonzabac® 12 | 12 % | 12 % | - | - | - |
| Genamin CCP 100 D® | - | - | - | 12 % | 12 % |
| Hexyldiglykol | - | 20 % | 20 % | 20 % | - |
| Marlipal® 13/120 | 20 % | 20 % | 20 % | 20 % | 20 % |
| Lutensol® ON 110 | 6 % | 6 % | 6 % | 6 % | 6 % |
| Wasser | 62 % | 42 % | 54 % | 42 % | 62 % |

Formulierung F entspricht C aus Beispiel 1
Formulierung G entspricht A aus Beispiel 1
Formulierung H entspricht B aus Beispiel 1

### Beispiel 3

Die Versuchsanordnung ist die gleiche wie bei Beispiel 2. Als Testkeim wird Ps. aeruginosa verwendet. Die Einwirkzeit ist kurz.

| Einwirkzeit | Konz. [%] | Formulierung (nur Glykolether) | G Formulierung (Amin + Glykolether) | H Formulierung I (nur Amin) |
|---|---|---|---|---|
| 5 min | 0,5 | 0 | 1,02 | 0,76 |
| | 1,0 | 0 | 1,22 | 0,78 |
| | 3,0 | 0 | 3,42 | 0,78 |
| | 5,0 | 0 | ≧ 5,23 | 0,81 |

Die Wirkungssteigerung durch den Zusatz des begrenzt wassermischbaren Glykolethers wird besonders in den Untersuchungen mit Pseudomonas aeruginosa - speziell im unteren Konzentrationsbereich und bei kurzen Einwirkzeiten (Beispiel 3) - deutlich. Staphylococcus aureus ist bereits gegenüber der Grundmischung relativ empfindlich; dennoch wird durch Zusatz des Glykolethers bei kurzen Zeiten und niedrigen Konzentrationen eine Erhöhung der Keimreduktion erzielt.

## Patentansprüche

1. Desinfektionsmittelkonzentrat, das Amin und Alkohol umfaßt, derart, daß die Alkoholkomponente mindestens einen begrenzt wassermischbaren aliphatischen Glykolether mit 1 bis 4 Alkylenoxideinheiten umfaßt, wobei die Wassermischbarkeit nicht mehr als 10 % beträgt, und die Aminkomponente mindestens ein sekundäres und/oder tertiäres, hydroxygruppenfreies Alkylamin umfaßt.

2. Desinfektionsmittelkonzentrat nach Anspruch 1, dadurch gekennzeichnet, daß das Alkylamin die allgemeine Formel 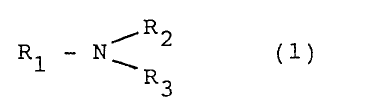 aufweist, in der R₁ eine C₄-C₂₀-, insbesondere C₆-C₁₈-Alkylgruppe, eine C₅-C₁₀-, insbesondere C₆-Cycloalkylgruppe, eine C₇-C₁₀-, insbesondere C₇-Arylalkylgruppe oder eine C₆-C₁₄-, insbesondere C₆-Arylgruppe ist, R₂ eine Aminoalkylgruppe der Formel -(CH₂)ₙ-NH₂ ist, wobei n eine Zahl von 2 bis 10, bevorzugter eine Zahl von 2 bis 6, insbesondere 2 bis 3 ist, und R₃ Wasserstoff oder gleich R₂ ist.

3. Desinfektionsmittelkonzentrat nach einem der Ansprüche 1 oder 2, dadurch gekennzeichnet, daß R₁ eine Dodecyl-, Cocosfettalkyl- oder eine Talgfettalkylgruppe ist.

4. Desinfektionsmittelkonzentrat nach einem der Ansprüche 1 bis 3, dadurch gekennzeichnet, daß das Amin N-(3-Aminopropyl)-N-dodecyl-1,3-propandiamin ist.

5. Desinfektionsmittelkonzentrat nach einem der Ansprüche 1 bis 4, dadurch gekennzeichnet, daß der begrenzt wassermischbare aliphatische Glykolether die allgemeine Formel
R₄ - (O - R₅ )ₙ - OH, (2)
umfaßt, in der R₄ eine gerad- oder verzweigtkettige Alkylgruppe mit 5 bis 18 C-Atomen, bevorzugt 6 C-Atomen ist, R₅ eine gerad- oder verzweigtkettige Alkylengruppe mit 2 bis 4 C-Atomen, bevorzugt 2 C-Atomen ist und n eine ganze Zahl zwischen 1 und 4, bevorzugt 2 ist.

6. Desinfektionsmittelkonzentrat nach Anspruch 5, dadurch gekennzeichnet, daß der Glykolether Hexyldiglykol ist.

7. Desinfektionsmittelkonzentrat nach einem der vorhergehenden Ansprüche, dadurch gekennzeichnet, daß der Glykolether eine Wassermischbarkeit von bis zu 5 % einen Dampfdruck < 0,5 mbar, bevorzugter < 0,3 mbar und/oder einen Geruchsschwellenwert (in Wasser) > 10 mmol/l, bevorzugter > 20 mmol/l aufweist.

8. Desinfektionsmittelkonzentrat nach einem der vorhergehenden Ansprüche, dadurch gekennzeichnet, daß es außerdem üblich Zusatzstoffe wie Lösungsvermittler, Korrosionsschutzmittel, Komplexbildner, Entschäumer, Stabilisatoren, Puffer, Parfüm und/oder Farbstoffe umfaßt`

9. Desinfektionsmittelkonzentrat nach einem der vorhergehenden Ansprüche, dadurch gekennzeichnet, daß es anionisches Tensid enthält, das insbesondere Alkylsulfat, Alkylsulfonat, Alkylethersulfat, Alkylarylsulfonat, Alkylethercarbonsäure bzw. deren Alkali- oder Ammoniumsalz, wobei die Alkylgruppe 8 bis 18 Kohlenstoffatome enthält, oder eine Mischung von zwei oder mehr dieser Verbindungen und bevorzugt Alkylethercarbonsäure mit 2 bis 10, insbesondere 3 bis 5 Ethylenoxideinheiten umfaßt.

10. Desinfektionsmittelkonzentrat nach einem der vorhergehenden Ansprüche, dadurch gekennzeichnet, daß es nichtionisches Tensid umfaßt.

11. Desinfektionsmittelkonzentrat nach einem der vorhergehenden Ansprüche, dadurch gekennzeichnet, daß es 5 bis 50 Gew.% sekundäres und/oder tertiäres Amin und 5 bis 50 Gew.% begrenzt wassermischbaren Glykolether und insbesondere 10 bis 20 Gew.% Amin und 20 bis 30 Gew.% Glykolether umfaßt.

12. Desinfektionsmittel, dadurch gekennzeichnet, daß es eine wäßrige Verdünnung des Desinfektionsmittelkonzentrats gemäß einem der Ansprüche 1 bis 11 ist.

13. Desinfektionsmittel nach Anspruch 12, dadurch gekennzeichnet, daß es 0,1 bis 10 Gew.%, insbesondere 0,5 bis 5 Gew.% des Desinfektionsmittelkonzentrats gemäß einem der Ansprüche 1 bis 11 enthält.

14. Desinfektionsmittel nach einem der Ansprüche 12 oder 13, dadurch gekennzeichnet, daß es 0,005 bis 5 Gew.% sek. und/oder tert. Amin und 0,005 bis 5 Gew.% begrenzt wassermischbaren Glykolether, insbesondere 0,025 bis 2,5 Gew.% Amin und 0,05 bis 2,5 Gew.% Glykolether umfaßt.

15. Desinfektionsmittel nach einem der Ansprüche 12 bis 14, dadurch gekennzeichnet, daß es einen pH-Wert von 7 bis 12, insbesondere 8 bis 11 und bevorzugt 8,5 bis 10,5 aufweist.

16. Verwendung des Desinfektionsmittelkonzentrats gemäß einem der Ansprüche 1 bis 11 oder des Desinfektionsmittels gemäß einem der Ansprüche 12 bis 15 als Bakterizid, Mykobakterizid, Fungizid oder Viruzid.

## Claims

1. Disinfectant concentrate, which contains amine and alcohol, such that the alcohol component includes at least one aliphatic glycol ether of limited miscibility with water having 1 to 4 alkylene oxide units, the miscibility with water being not more than 10 % and the amine component contains at least one secondary and/or tertiary alkyl amine free from hydroxyl groups.

2. Disinfectant concentrate according to claim 1, characterized in that the alkyl amine has the general formula 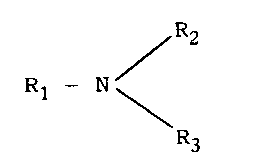 in which R₁ is a C₄-C₂₀, particularly a C₆-C₁₈ alkyl group, a C₅-C₁₀, particularly a C₆ cycloalkyl group, a C₇-C₁₀, particularly a C₇ aryl alkyl group or a C₆-C₁₄, particularly a C₆ aryl group, R₂ is an aminoalkyl group of the formula -(CH₂)ₙ-NH₂, whereby n is a number from 2 to 10, more preferably a number from 2 to 6, particularly 2 to 3, and R₃ is hydrogen or the same as R₂.

3. Disinfectant concentrate according to one of claims 1 or 2, characterized in that R₁ is a dodecyl, coconut fat alkyl or a tallow fat alkyl group.

4. Disinfectant concentrate according to one of claims 1 to 3, characterized in that the amine is N-(3-aminopropyl)-N-dodecyl-1,3-propane diamine.

5. Disinfectant concentrate according to one of claims 1 to 4, characterized in that the aliphatic glycol ether of limited miscibility with water has the general formula
R₄ - (O - R₅ )ₙ- OH, (2)
in which R₄ is a straight- or branch-chained alkyl group having 5 to 18 C atoms, preferably 6 C atoms, R₅ is a straight- or branch-chained alkylene group having 2 to 4 C atoms, preferably 2 C atoms and n is a whole number between 1 and 4, preferably 2.

6. Disinfectant concentrate according to claim 5, characterized in that the glycol ether is hexyl diglycol.

7. Disinfectant concentrate according to one of the preceding claims, characterized in that the glycol ether has a miscibility with water of up to 5 %, a vapour pressure of < 0.5 mbar, more preferably < 0.3 mbar and/or an odour threshold value (in water) of > 10 mmol/l, more preferably > 20 mmol/l.

8. Disinfectant concentrate according to one of the preceding claims, characterized in that it also contains usual additives such as solubilizers, anti-corrosion agents, complexing agents, defoaming agents, stabilisers, buffer, perfume and/or dyes.

9. Disinfectant concentrate according to one of the preceding claims, characterized in that it contains anionic surfactant which in particular contains alkyl sulphate, alkyl sulphonate, alkyl ether sulphate, alkyl aryl sulphonate, alkyl ether carboxylic acid and its alkali or ammonium salt, whereby the alkyl group contains 8 to 18 carbon atoms, or a mixture of two or more of these compounds and preferably alkyl ether carboxylic acids having 2 to 10, particularly 3 to 5 ethylene oxide units.

10. Disinfectant concentrate according to one of the preceding claims, characterized in that it contains non-ionic surfactant.

11. Disinfectant concentrate according to one of the preceding claims, characterized in that it contains 5 to 50 wt.% secondary and/or tertiary amine and 5 to 50 wt.% glycol ether of limited miscibility with water and particularly 10 to 20 wt.% amine and 20 to 30 wt.% glycol ether.

12. Disinfectant, characterized in that it is an aqueous dilution of the disinfectant concentrate according to one of claims 1 to 11.

13. Disinfectant according to claim 12, characterized in that it contains 0.1 to 10 wt.%, particularly 0.5 to 5 wt.% of the disinfectant concentrate according to one of claims 1 to 11.

14. Disinfectant according to one of claims 12 or 13, characterized in that it contains 0.005 to 5 wt.% sec. and/or tert. amine and 0.005 to 5 wt.% glycol ether of limited miscibility with water, particularly 0.025 to 2.5 wt.% amine and 0.05 to 2.5 wt.% glycol ether.

15. Disinfectant according to one of claims 12 to 14, characterized in that it has a pH value of 7 to 12, in particular 8 to 11 and preferably 8.5 to 10.5.

16. Use of the disinfectant concentrate according to one of claims 1 to 11 or of the disinfectant according to one of claims 12 to 15 as bactericide, mycobactericide, fungicide or virucide.

## Revendications

1. Concentré d'agent désinfectant qui contient une amine et un alcool de façon que le composant d'alcool comporte un glycol éther aliphatique ayant 1 à 4 unités d'oxyde d'alkylène à miscibilité limitée dans l'eau, la miscibilité dans l'eau ne dépassant pas 10%, et le composant d'amine comporte au moins une amine secondaire et/ou tertiaire, sans groupe hydroxy.

2. Concentré d'agent désinfectant selon la revendication 1, caractérisé en ce que l'alkylamine présente la formule générale 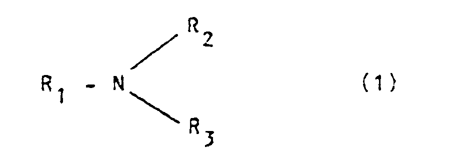 dans laquelle R₁ est un groupe alkyle C₄-C₂₀, en particulier C₅-C₁₈, un groupe cycloalkyle C₅-C₁₀, en particulier C₆, un groupe arylalkyle C₇-C₁₀, en particulier C₇ ou bien un groupe aryle C₆-C₁₄, en particulier C₆, R₂ est un groupe aminoalkyle de la formule -(CH₂)ₙ-NH₂ , n étant un nombre de 2 à 10, préférentiellement un nombre de 2 à 6 et, en particulier, de 2 à 3, et R₃ est de l'hydrogène ou bien est identique à R₂.

3. Concentré d'agent désinfectant selon l'une quelconque des revendications 1 ou 2, caractérisé en ce que R₁ est un groupe dodécyle, alkyle d'huile de coco ou alkyle de suif.

4. Concentré d'agent désinfectant selon l'une quelconque des revendications 1 à 3, caractérise en ce que l'amine est la N-(3-aminopropyl)-N-dodécyl-1,3-propanediamine.

5. Concentré d'agent désinfectant selon l'une quelconque des revendications 1 à 4, caractérisé en ce que le glycol éther aliphatique à miscibilité limitée dans l'eau a la formule générale
R₄ - (O - R₅)ₙ - OH, (2)
dans laquelle R₄ est un groupe alkyl à chaîne droite ou ramifiée, ayant 5 à 18 atomes de C, préférentiellement 6 atomes de C, R₅ est un groupe alkylène à chaîne droite ou ramifiée ayant 2 à 4 atomes de C, préférentiellement 2 atomes de C et n est un nombre entier compris entre 1 et 4, préférentiellement 2.

6. Concentré d'agent désinfectant selon la revendication 5, caractérisé en ce que le glycol éther est de l'hexyldiglycol.

7. Concentré d'agent désinfectant selon l'une quelconque des revendications précédentes, caractérisé en ce que le glycol éther a une miscibilité dans l'eau pouvant atteindre 5%, une pression de vapeur < 0,5 mbar, préférentiellement < 0,3 mbar et/ou une valeur de seuil olfactif (dans l'eau) > 10 mmoles/l, préférentiellement > 20 mmoles/l.

8. Concentré d'agent désinfectant selon l'une quelconque des revendications précédentes, caractérisé en ce qu'il comporte, par ailleurs, les additifs habituels comme des intermédiaires de dissolution, des agents de protection contre la corrosion, des agents complexants, des agents antimousse, des agents stabilisants, des tampons, des parfums et/ou des colorants.

9. Concentré d'agent désinfectant selon l'une quelconque des revendications précédentes, caractérisé en ce qu'il contient un agent tensio-actif antonique qui comporte, en particulier, un sulfate d'alkyle, un sulfonate d'alkyle, un alkyl ether sulfate, un alkylaryl sulfonate, un acide alkyl éther carbonique ou, respectivement, son sel alcalin ou d'ammonium, le groupe alkyle contenant 8 à 18 atomes de carbone, ou bien un mélange de deux ou plusieurs de ces composés et, préférentiellement de l'aide alkyl éther carbonique avec 2 à 10, en particulier, 3 à 5 unités d'oxyde à'éthylène.

10. Concentré d'agent désinfectant selon l'une quelconque des revendications précédentes, caractérisé en ce qu'il contient un agent tensio-actif non ionique.

11. Concentré d'agent désinfectant selon l'une quelconque des revendications précédentes, caractérisé en ce qu'il comporte 5 à 50% en poids d'amine secondaire et/ou tertiaire et 5 à 50% en poids de glycol éther à miscibilité limitée dans l'eau et, en particulier, 10 à 20% en poids d'amine et 20 à 30% en poids de glycol éther.

12. Agent désinfectant, caractérisé en ce que c'est une dilution aqueuse du concentré d'agent désinfectant selon l'une quelconque des revendications 1 à 11.

13. Agent désinfectant selon la revendication 12, caractérisé en ce qu'il contient 0,1 à 10% en poids, en particulier 0,5 à 5% en poids, du concentré d'agent désinfectant selon l'une quelconque des revendications 1 à 11.

14. Agent désinfectant selon l'une quelconque des revendications 12 ou 13, caractérisé en ce qu'il comporte 0,005 à 5% en poids d'amine secondaire et/ou tertiaire et 0,005 à 5% en poids de glycol éther à miscibilité limitée dans l'eau, en particulier 0,025 à 2,5% en poids d'amine et 0,05 à 2,5% en poids de glycol éther.

15. Agent désinfectant selon l'une quelconque des revendications 12 à 14, caractérisé en ce qu'il présente une valeur de pH de 7 à 12, en particulier de 8 à 11 et, préférentiellement de 8,5 à 10,5.

16. Utilisation du concentré de l'agent désinfectant selon l'une quelconque des revendications 1 à 11 ou bien de l'agent désinfectant selon l'une quelconque des revendications 12 à 15 en tant que bactéricide, mycobactéricide, fongicide ou virucide.
